# EUROPEAN PATENT APPLICATION

(11) **EP 1 976 293 A1**
(43) Date of publication of application: **01.10.2008**
(21) Application number: 06834104.9
(22) Date of filing: 06.12.2006
(51) Int. Cl.: H04N 7/173, G06F 13/00, H04L 9/08, H04N 7/16

(54) **INFORMATION DISTRIBUTION SYSTEM, INFORMATION DISTRIBUTION METHOD, NODE DEVICE, KEY DATA MANAGEMENT DEVICE, AND RECORDING MEDIUM**

(30) Priority: 23.01.2006 JP 2006014182
(71) Applicant: Brother Kogyo Kabushiki Kaisha, Nagoya-shi, Aichi 467-8561 (JP)
(72) Inventor: USHIYAMA, Kentaro, Aichi 467-8561 (JP)
(74) Representative: Smith, Samuel Leonard
(86) International application number: PCT/JP2006/324349
(87) International publication number: WO 2007/083454

(57) **Abstract**

Provided is an information distribution system capable of acquiring the program information having failed to be recorded, reliably and by a simple operation, without burdening a server device with heavy loads. The system includes a plurality of node devices capable of communicating with each other through a network. The node device having received and stored the program information broadcast from a broadcasting station creates the identification information corresponding to the program code intrinsic to the program information stored, and sends a message to register the node device having stored the program information, on the basis of the identification information, to the node device managing that identification information. The node device desiring to acquire the program information creates the identification information corresponding to the program code intrinsic to the program information desired to acquire, and sends a message requesting the program information, on the basis of the identification information, to the node device having managed the identification information, thereby to acquire that program information from the node device storing that program information.

## Description

### FIELD OF THE INVENTION

The present invention relates to an information delivery system and the like including a plurality of node devices capable of mutually communicating through a network, wherein any one of the node devices receives information of a program broadcasted from a broadcast station.

### BACKGROUND OF THE INVENTION

Recently quality of contents to be recorded by an individual users, such as digital broadcasting, hard disc recorders, G code reservation (elements (recording date, recording channel, recording start time, recording finish time) encoded for reserving record of programs, and automatic CM (Commercial Message) cut, is enhanced. Further, there is known function of preventing from recording failure by keyword recording and the like.

Patent Document 1 discloses program recording system having a plurality of recording devices recording program data including image and sound of broadcasted programs, a program database device recording program information indicative of at least broadcast start time and broadcast finish time of the program with respect to every broadcasted program, and a server device connected to the program database device. In this program recording system, in a case where it fails to start recording program data without catching the broadcasting start time in a recording device, the program data are searched out of program data recorded in respective recording devices with the server device for a period from a broadcast start time to a broadcast finish time of requisite programs, and the program data thus searched are acquired and recorded with the recording device which fails to record the program data. Therefore, requisite program data are searched among predetermined program data which are recorded in one recording device after the broadcast start time, and the program data can be delivered and received between recording devices.
[Patent Document 1] Japanese Unexamined Patent Publication No. 2004-320455

### DISCLOSURE OF THE INVENTION

### PROBLEM TO BE SOLVED BY THE INVENTION

However, in the above-mentioned program recording system, since a server device handles delivery and receipt of program data between recording devices, the server device is placed with much burden when number of people using the program recording system increases.

Further, with regard to secondary use of the program data due to delivery and receipt of recorded program data, there is a problem related to copyrights of program producers, auteur of broadcast station side and the like.

Furthermore, for example, program data which are broadcasted one week or one month before are already deleted in the recording device with high probability, and therefore release and rental of video and DVD or rebroadcast should be waited.

The present invention is made in view of the above problems and an object of the present invention is to provide an information delivery system, an information delivery method, a node device, a key data management device, and a recording medium, which can acquire program information by more secured and easier operation, even in a case where the program information includes program data which are failed to record, without imposing much burden on a specific device such as the above-mentioned server device, and which can guarantee rights of program produces, auteur of the broadcast station side and the like with respect to the secondary use of the program information.

### MEANS FOR SOLVING THE PROBLEM

To solve the above problem, according to a first aspect of the present invention, there is provided an information distribution system including a plurality of node devices mutually communicable through a network, wherein any one of the node devices receives program information broadcasted from a broadcast station,
wherein the node device receiving the program information thus broadcasted, including:
a program information storage means for storing the program information;
an identification information generation means for acquiring a program code unique to the program information thus stored and generating identification information corresponding thereto; and
a registration message delivery means for delivering a registration message including node information indicative of the node device thus storing the program information to a node device managing the identification information based on the identification information thus generated,
wherein the node device managing the identification information, including:
a registration message receipt means for receiving the registration message; and
a node information storage means for memorizing the node information included in the registration message thus received, and
the node device desiring to acquire the program information, including:
   an identification information generation means for acquiring a program code unique to the program information and generating identification information corresponding thereto;
   a request message delivery means for delivering a request message requesting the program information to the node device managing the identification information based on the identification information thus generated; and
   a program information acquisition means for acquiring the program information from the node device storing the program information regarding the request, by delivering the request message.

According to the present invention, identification information corresponding to the program information stored is generated, and the node information of the node device storing the program information is memorized in the node device managing the identification information. Therefore, the node device requiring to obtain the program information generates the identification information corresponding to the program code of the desired program and delivers the request message to the other nodes using the identification information as the key. Accordingly, it is possible to know existence of the program information of the desired program through the node device which originally managing the identification information.

Further, because more popularity a program has more users record program information thereof, it is possible to apt to access (acquire) the program information having more popularity without applying a load to specific device such as a server device and to acquire program information failed to record more certainly and more easily.

According to another aspect of the present invention, there is provided an information distribution system including a plurality of node devices capable of mutually communicating through a network,
wherein any one of the node devices receives program information broadcasted from a broadcast station, the node device receiving the program information thus broadcasted, including:
a key data memory means for memorizing key data unique to the node device;
a program code acquisition means for acquiring a program code unique to the program information thus received;
an encryption key generation means for generating an encryption key based on the key data thus memorized and the program code thus acquired;
an encoding means for encoding the program information thus received using the encryption key thus generated;
a program information storage means for storing the program information thus encoded;
an identification information generation means for generating identification information corresponding to the program code thus acquired; and
a registration message delivery means for delivering a registration message including node information indicative of the node device storing the program information thus encoded to a node device managing the identification information based on the identification information thus generated,
wherein the node device managing the identification information, including:
a registration message receipt means for receiving the registration message; and
a node information memory means for memorizing the node information included in the registration message thus received, and
wherein the node device desiring to acquire the program information thus encoded, including:
an identification information generation means for acquiring a program code unique to the program information and generating identification information corresponding thereto;
a request message delivery means for delivering a request message requesting the program information to the node device managing the identification information based on the identification information thus generated;
a program information acquisition means for acquiring the program information from the node device storing the program information regarding the request, by delivering the request message;
a decryption key acquisition means for acquiring a decryption key for decoding the program information thus acquired; and
a decoding means for decoding the program information thus acquired using the decryption key.

According to the present invention, the identification information corresponding to the program code unique to the program related to the program information thus stored is generated, and the node information of the node device which stores the program information is memorized in the node device which originally manages the identification information. Therefore, the node device which requires to acquire the program information generates the identification information corresponding to the program code of the desired program and delivers the request message to the other node device using the identification information as a key. Thus it becomes possible to know existence of the program information of the desired program through the node device which manages the identification information.

Further, because the program information is encrypted and stored, it is possible to improve security. Further, because the encryption key of the program information is a key generated based on key data unique respectively to the node devices and a program code of the program, it is possible to prevent the other node devices from generating a decryption key of the program information encrypted and stored by a certain node device, security can be furthermore assured.

Further, according to another aspect of the present invention, there is provided the information distribution system including:
a key data management device communicable with the respective node devices through the network,
wherein the program information is added with encoded identification information of the node device to the program information, and
the decryption key acquisition means of the node device acquiring the program information thus encoded transmits, to the key data management device, decryption key request information including the program code of the acquired program information and the identification information of the node device added to the program information,
wherein the key data management device, including:
a key management means for managing key data unique to the respective node devices in correspondence with identification information unique to the respective node devices;
a decryption key generation means for acquiring key data in correspondence with the identification information of the node device included in the decryption key request information and generating the decryption key based on the program code included in the key data and the decryption key request information; and
a decryption key transmission means for transmitting the decryption key thus generated to the node device transmitting the decryption key request information.

According to this invention, the encryption key and the decryption key for the program information are keys generated based on the key data unique respectively to the node devices and the program code of the program, and the keys other than the encryption key for the user are issued only from the key data management device knowing the key data of all node devices. Therefore, it is impossible to generate a decryption key for encrypted and stored program information in a certain node device and to decode other program information using the decode key thus acquired. Accordingly, it is possible to furthermore assure the safety.

Further, according to another aspect of the present invention, there is provided a node device acquiring the program information, which is included in the information distribution system, including:
a program information storage means for storing the acquired program information;
an identification information generation means for acquiring the program code unique to the program information thus stored and generating the identification information corresponding thereto; and
a registration message delivery means for delivering a registration message including node information indicative of the node device thus storing the program information to a node device managing the identification information based on the identification information thus generated.

According to the invention, the node device acquiring the program information is published through a node device originally managing the identification information as a node device newly storing the program information. Therefore, it is possible to more easily access (acquire) program information having more popularity without applying load to a specific device such as a server device and to acquire program information failed to record more assuredly and with easier operation.

According to another aspect of the invention, there is provided the node device, which receives the broadcasted program information, included in the information distribution system, further including:
a program information storage means;
an identification information generation means; and
a registration message delivery means.

According to another aspect of the invention, there is provided a node device, which desires to acquire the program information, included in the information distribution system, further including:
an identification information generation means;
a request message delivery means; and
a program information acquisition means.

According to another aspect of the invention, there is provided a recording medium which records, in a computer readable manner, a node processing program causing a computer to function as the node device.

According to another aspect of the invention, there is provided the key data management device included in the information distribution system, further including:
a key management means;
a decryption key generation means; and
a decryption key transmission means.

According to another aspect of the invention, there is provided the key data management device, further including:
a user information management means for memorizing and managing user information with respect to each of the users of the respective node devices; and
an accounting process means for carrying out an accounting process to the user of the node device to which the decryption key request information is transmitted,
wherein, upon the completion of the accounting process, the decryption key transmission means transmits the decryption key thus generated to the node device.

According to the invention, the decryption key is transmitted to the node device after the accounting process is carried out. Therefore, it is possible to surely account a charge with respect to a secondary use of the program information. The charge collected is paid to the program producer, the auteur on the broadcasting station and so on in compliance with a predetermined standard. Therefore, rights of the program producer, the auteur on the broadcasting station and so on with respect to the secondary use of the program information can be guaranteed.

According to another aspect of the invention, there is provided the key data management device,
wherein identification information of the node device storing the program information is included in the decryption key request information, the key data management device, further including:
a user information management means for managing the user information with respect to each of the users of the respective node devices in correspondence with the identification information unique to the respective node devices; and
a value provision process means for carrying out a value provision process to the user identified by the user information in correspondence with the identification information of the node device storing the program information included in the decryption key request information.

According to the present invention, because the user of the node device storing the program information can get pay for storage of the program information, there is benefit in storing the program information which was broadcasted and recorded quite a few years ago, e.g. before one month or further before one year, without erasing the program. Therefore, it is possible to provide all users with motivation of remaining the program information. Accordingly, it is possible to acquire program information of quite a few years ago by a more certain and easier operation.

According to another aspect of the invention, there is provided the key data management device,
wherein identification information of the node device storing the program information is included in the decryption key request information, the key data management device, further including:
a user information management means for managing the user information with respect to each of the users of the respective node devices in correspondence with the identification information unique to the respective node devices; and
a value provision process means wherein it is judged whether or not CM information is included in the program information corresponding to the program code included in the decryption key request information, and in a case where the CM information is included, a value provision process is carried out to the user identified by the user information in correspondence with the identification information of the node device storing the program information included in the decryption key request information.

According to the present invention, when the program information is stored, a user storing the CM without cutting off CM increases (prevention of estrangement from CM by counter value). By this, because CM information is included in program information stored many node devices, a sponsor can enjoy enhanced CM effect when more users watch and listen the CM information.

According to another aspect of the invention, there is provided a recording medium which records, in a computer readable manner, the key data management process program causing a computer to function as the key data management device.

According to another aspect of the invention, there is provided an information distribution method in an information distribution system including a plurality of node devices capable of mutually communicating through a network,
wherein any one of the node devices receives program information broadcasted from a broadcast station, the node device receiving the program information thus broadcasted, including:
a step of storing program information;
a step of acquiring a program code unique to the program information thus stored and generating identification information corresponding thereto; and
a step of delivering a registration message including node information indicative of the node device storing the program information to a node device managing the identification information based on the identification information thus generated,
wherein the node device managing the identification information, including:
a step of receiving the registration message; and
a step of memorizing the node information included in the registration message thus received,
wherein a node device desiring to acquire the program information, including:
a step of acquiring a program code unique to the program information and generating identification information corresponding thereto;
a step of delivering a request message requesting the program information to the node device managing the identification information based on the identification information thus generated; and
a step of acquiring the program information from the node device storing the program information regarding the request by delivering the request message.

According to another aspect of the invention, there is provided an information providing method in an information distribution system including a plurality of node devices mutually communicable through a network,
wherein any one of the node devices receives program information broadcasted from a broadcast station,
wherein the node device receiving the program information thus broadcasted, including:
a step of memorizing key data unique to the node device;
a step of acquiring a program code unique to the program information thus received;
a step of generating an encryption key based on the key data thus memorized and the program code thus acquired;
a step of encoding the program information thus received using the encryption key thus generated;
a step of storing the program information thus encoded;
a step of generating identification information corresponding to the program code thus acquired; and
a step of delivering a registration message including node information indicative of the node device storing the program information thus encoded to a node device managing the identification information based on the identification information thus generated,
wherein the node device managing the identification information, including:
a step of receiving the registration message; and
a step of memorizing the node information included in the registration message thus received,
wherein a node device desiring to acquire the program information thus encoded, including:
a step of acquiring a program code unique to the program information and generating identification information corresponding thereto;
a step of delivering a request message of requesting the program information to the node device managing the identification information based on the identification information thus generated;
a step of delivering the request message and acquiring the program information from the node device storing the program information regarding the request;
a step of acquiring a decryption key for decoding the program information thus acquired; and
a step of decoding the program information thus acquired using the decryption key.

### EFFECT OF THE INVENTION

According to the present invention, identification information corresponding to a program code unique to a program related to stored program information is generated and the program information to be stored in a node device is memorized in a node device to manage the identification information. Therefore, a node device desiring to acquire the program information generates identification information corresponding to the program code of the desired program and transfers a request message with the identification information as a key to the node device to manage the identification information, thereby acquiring the program information from the node devices storing program information of the desired program.

Further, the more popular program information is recorded by the more users and is stored by the more node devices, the more popular program information is easier to access (be acquired) without placing burden on specific devices such as a server device. Therefore, the program information can be acquired by the more secured and easier operation, even in a case where the program information is one of the program failed to record.

### BRIEF DESCRIPTION OF THE DRAWINGS

[FIG. 1] A view showing an example of connection mode of respective node devices in a content distributing system according to the present embodiment.
[FIG. 2] A view showing an example of a routing table using DHT retained by node n1.
[FIG. 3] A schematic view showing an example of ID space of DHT.
[FIG. 4] A schematic view showing an example of flow of publish message transmitted from a content retention node in a node ID space of DHT.
[FIG. 5] A view showing an example of configuration of a node nn.
[FIG. 6] A view showing an example of configuration of an accounting server 2b.
[FIG. 7] A flowchart showing a content recording process in a control unit 11 of a node nn related to a first embodiment.
[FIG. 8] A flowchart showing a content reproduction process in the control unit 11 of the node nn related to the first embodiment.
[FIG. 9] A flowchart of an accounting process in a control unit 21 of the accounting server 2b related to the first embodiment.
[FIG. 10] A flowchart showing a content recording process in a control unit 11 of a node nn related to a second embodiment.
[FIG. 11] A flowchart showing a content reproduction process in the control unit 11 of the node nn related to the second embodiment.
[FIG. 12] A flowchart of an accounting process in a control unit 21 of the accounting server 2b related to the second embodiment.

### EXPLANATION OF NUMERICAL REFERENCES

- nn: Node
- 2a: Broadcast station
- 2b: Accounting server
- 8: Network
- 9: Overlay network
- 11: Control unit
- 12: Memory unit
- 13: Buffer memory
- 14: Decoder
- 15: Image processing unit
- 16: Display unit
- 17: Audio processing unit
- 18: Speaker
- 19: Encoder
- 19a: Communication unit
- 19b: Receiving unit
- 19c: Input unit
- 19d: Bus
- 21: Control unit
- 22: Memory unit
- 23: Communication unit
- 24: Bus
- S: Content distributing system

### THE BEST MODE FOR CARRYING OUT THE INVENTION

Hereinafter, embodiments of the present invention will be described in reference of figures. Here, the embodiments explained below are embodiments in a case where the present invention is applied to a content distributing system.

### [1. Configuration and the like of content distributing system]

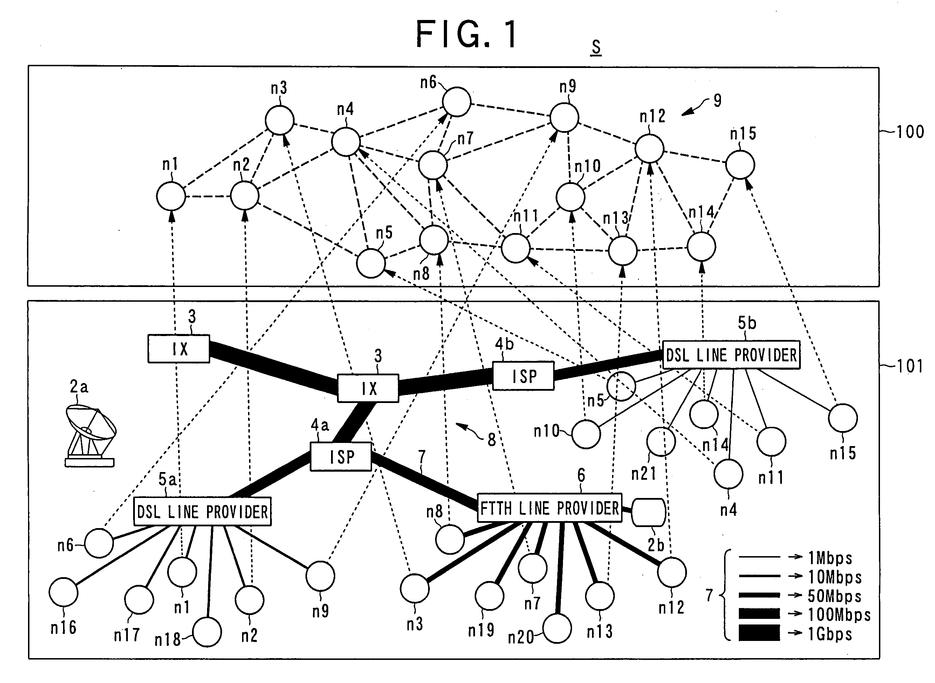

First, with reference to FIG. 1, schematic configuration and the like of a content distributing system as an example of the content distributing system are described.

FIG. 1 is a view showing an example of connection status of respective node devices in a content distributing system according to the present embodiment.

As shown in lower frame 101 of FIG. 1, a network 8 (communication network in real world) of the Internet or the like is constructed by an internet exchange (IX) 3, internet service providers (ISP) 4a and 4b, digital subscriber line (DSL) providers (or device thereof) 5a and 5b, fiber to the home (FTTH) line provider (or device thereof) 6, and communication line (e.g. a phone line or an optical cable) 7 and the like. Here, in the network 8 (a communication network) of the example of FIG. 1, a router for transferring data (packet) is appropriately inserted (not shown in the figures).

The content distributing system S is provided with a plurality of node devices (hereinafter referred to as "nodes") n1, n2, ... n21 which are mutually connected through a network 8 and the system is a Peer to Peer network system (actually more nodes existing). Further, a unique manufacturing number and an IP (Internet Protocol) address are allocated to each of the nodes n1 to n2. Such manufacturing numbers and IP addresses do not overlap among plural nodes.

These nodes n1 to n21 are capable of recording (storing) program information (hereinafter referred to as "content data") having program data (CM information and the like being incorporated in the program in some cases) including images and sounds in the program broadcasted by various broadcast channels from a broadcast station 2a. As broadcast media broadcasting the content data from the broadcast station 2a, dedicated lines including satellite radio wave, ground wave, internet, CATV (Cable Television or Community Antenna Television) cable are applicable. Further, an accounting process for secondary use of content data is carried out by an accounting server 2b.

Then, in this content distributing system S, an overlay network 9 is configured by a specific algorithm, for example, an algorithm using DHT (Distributed Hash Table) as shown in an upper frame 100 of FIG. 1. That is, the overlay network 9 means a network (logical network) configuring a virtual link formed in use of an existing network 8.

In the present embodiment, an overlay network 9 configured by an algorithm using DHT is premised, and nodes n1 to n15 allocated to this overlay network 9 (in the upper frame 100 of FIG. 1) are named a node nn participating in the overlay network 9. In other words, the overlay network 9 is formed by participation of the node nn.

Participation into the overlay network 9 is done when a non-participating nodes n16 to n21 transmit a participation message indicative of a participation request to an arbitrary node nn already participating.

Further, each of the nodes nn has a node ID as unique identification information, and the node ID is for example a value (e.g. bit length is 160 bit) obtained by hashing an IP address or manufacturing number by common hash function (e.g. SHA-1), whereby the nodes are distributed and allocated in one ID space without deviation.

Thus, the node ID obtained by a common hash function (hashed) has very low possibility of having the same value in a case where the IP address or the manufacturing number differs. Since the hash function is well known, detailed explanation is omitted.

Further, the nodes nn respectively retain DHT. This DHT regulates transfer destination of various types of messages on the overlay network 9. Specifically, a routing table (transfer destination table) registered with a group of plural nodes ID and their IP addresses and port numbers which are appropriately apart in node ID space is included.

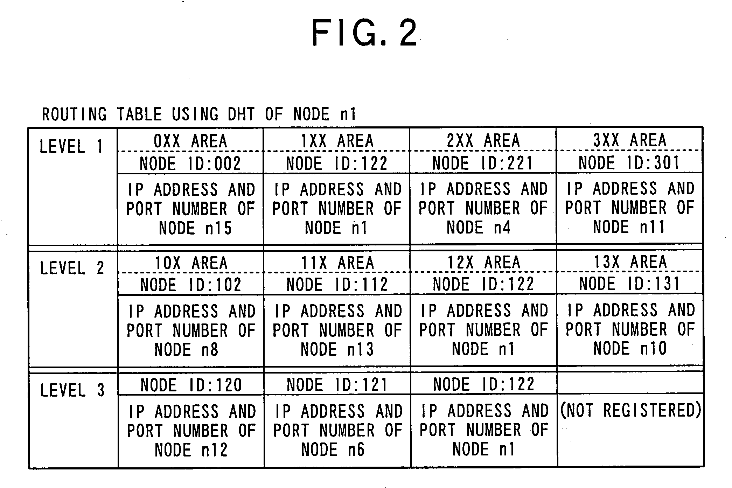

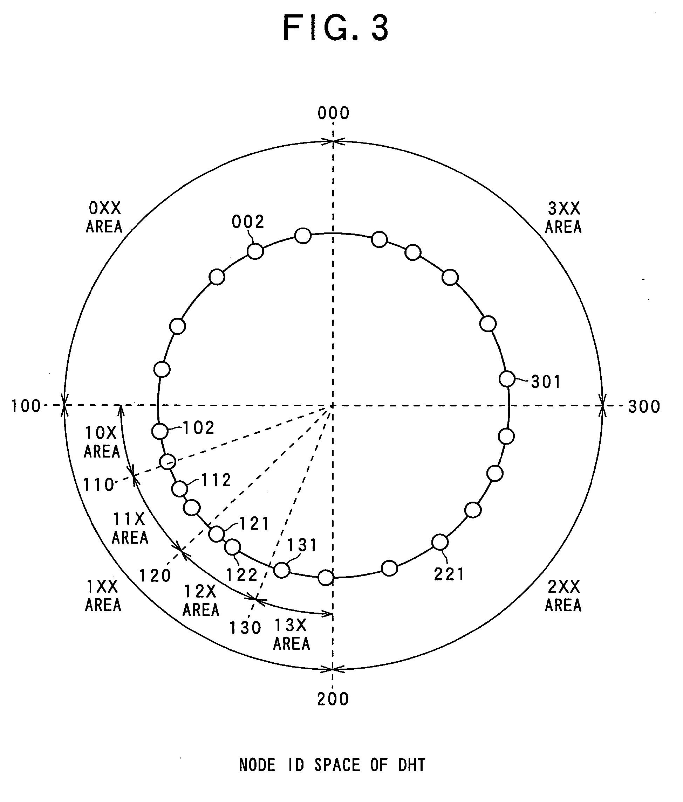

FIG. 2 is a view showing an example of a routing table of DHT retained by a node n1. FIG. 3 is a schematic view showing an example of a node ID space of DHT.

In the examples of FIGs. 2 and 3, for easy of explanation, a bit length of node ID is set up to be 2 bit X 3 digits = 6 bit, and each of the digits is expressed by quaternary number (an integer of 0 to 3) (practically, a longer bit length is used, and each digit is divided into, for example, 4 bit each and expressed by hexadecimal of 0 to f).

In the example of FIG. 2, the routing table of the DHT includes tables of levels 1 to 3 (classified into plural levels) . In a table entry of each level, node IDs and IP addresses and port numbers of a node nn corresponding to the node IDs are related and registered. Each area of a table in each level is an area obtained by dividing a node ID space of DHT. For example, as shown in FIG. 3, in level 1, an entire node ID space of the DHT is divided into four parts, and an area where node IDs "000" to "033" exist is designated as a 0XX area, an area where node IDs "100" to "133" exist is designated as a 1XX area, an area where node IDs "200" to "233" exist is designated as a 2XX area, and an area where node IDs "300" to "333" exist is designated as a 3XX area. Further in level 2, areas in level 1 (that is, areas "0XX" to "3XX") are further divided into four parts. For example, a 1XX area is divided into four parts, and an area where node IDs "100" to "103" exist is designated as a 10X area, an area where node IDs "110" to "113" exist is designated as an 11X area, an area where node IDs "120" to "123" exist is designated as a 12X area, and an area where node IDs "130" to "133" exist is designated as a 13X area.

For example, provided that a node ID of node n1 is "122", as shown in FIG. 2, in a table of the node n1 in the 1XX area (where the own node exists) in level 1, the node ID, an IP address of the own node (because IP address belongs to the own node, registration in the routing table is not required) and the like are registered. Further, in areas where the own node does not exist (i.e. areas of 0XX 2XX, and 3XX), node IDs, IP addresses and the like of other arbitrary nodes nn are respectively registered.

Further, in a table of the node n1 in 12X area (an area where the own node exists) in level 2, as shown in FIG. 2, node ID, IP address of the own node (because IP address belongs to the own node, registration in the routing table is not required) and the like are registered and in area where the own node does not exist (i.e. 10X, 11X, and 13X areas), node IDs and IP addresses of other arbitrary nodes nn are registered.

Further, in level 3 of the node n1, as shown in FIG. 2, node IDs which are between "120" and "122", IP addresses (because IP address belongs to the own node, registration in the routing table is not registered) and the like are registered.

In the examples of FIGs. 2 and 3, since a bit length of a node ID is set up to be three digits X 2 bit, a table having three levels 1 to 3 can cover everything. However, when the bit length of node ID increases, more tables are required for the increased amount (for example, in a case where bit length of a node ID is set up to be 16 digits x 4 bit, a table for 16 levels is required).

Thus, in a routing table of DHT according to the present embodiment, the higher the level becomes, the narrower the area becomes.

Such DHT is given when a non-participant node participates in the overlay network 9.

Meanwhile, in the overlay network 9, content data of various programs are saved (stored) in respective nodes nn by recording operation of users of respective nodes nn. For example, content data of a program X broadcasted from 17:00 to 18:00 on March 3, 2005 in broadcast channel 100 are stored in a node n1. Meanwhile, content data of a program Y broadcasted from 20:00 to 21:00, 2004 in a broadcast channel 120 are stored in a node n2 and a node n3. In such way, content data are distributed in plural nodes nn and stored. Hereinafter, a node nn storing content data is referred to as a "content retention node".

Further, a program code (e. g. G code) unique to the program is allocated to each of these content data. The content retention node hashes, according to user's instruction, the program code allocated to the stored content data by a hash function commonly used to obtain the node ID to generate content ID uniquely corresponding to the program code (that is, the content ID is allocated in the same ID space as the node ID). Thus, the content ID obtained by a common hash function (hashed) has very low possibility of having the same value in a case where the program code differs. Therefore, even in a case where the program has the same title (e. g. the program weekly broadcasted), the content ID is different because of different program code (e.g. G code).

Further, index information indicative of location of the content data thus distributed and stored (index list including node information (IP addresses and port number and the like) of respective content retention node storing the content data) is managed by a node nn, a manager of the above-mentioned content ID, (hereinafter referred to as a "root node"). For example, index information regarding a content data of program X is managed by a node n13 being a root node of the content (content ID), and index information regarding a content data of program Y is managed by a node n14 being a root node of the content (content ID). In other words, because root nodes are divided with respect to each content, load can be distributed. Moreover, even in a case where same content data (same content ID) are stored in a plurality of content retention nodes, index information of such the content data can be managed by one root node. Further, such a root node is determined to be a node nn having a node ID closest to, for example, content ID (e.g. upper digits match more).

Then, the node nn which stores the content data (content retention node) transmits a publish message (a message indicative of a request for registering node information of a storing source to a node nn participating in the overlay network 9 because the content data are stored, and a message to publish the information through the root node) as a registration message including the content ID of the content data and own node information (node information such as IP address and port number indicative of the content retention node storing content data) to the root node based on the content ID in order to notify that the content data are stored. Thus, the publish message reaches the root node by DHT routing using content ID as a key.

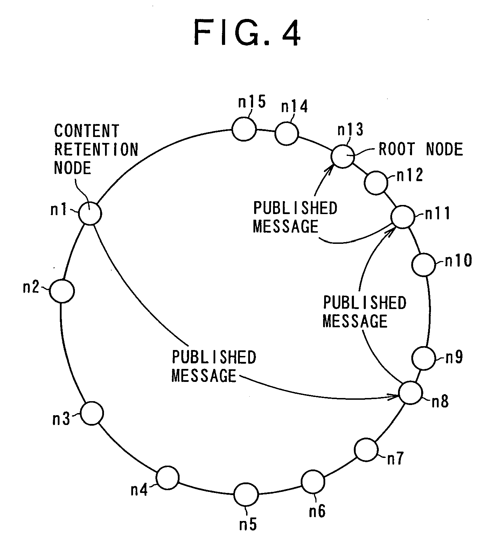

FIG. 4 is a schematic view showing an example of a flow of publish message transmitted from the content retention node in a node ID space of DHT.

In the example of FIG. 4, for example, the node n1 being a content retention node refers to a table of level 1 of the own DHT, acquires an IP address and a port number of, for example, a node n8 having node ID closest to a content ID included in the publish message (e.g. upper digits match more), and transmits the publish message to the IP address and the port number.

Meanwhile, the node n8 receives the publish message, refers to a table of level 2 of the own DHT, acquires an IP address and a port number of, for example, a node n11 having node ID closest to content ID included in the publish message (e.g. upper digits match more), and transfers the publish message to the IP address and the port number.

On the contrary thereto, the node n11 receives the publish message, refers to a table of level 3 of the own DHT, acquires an IP address and a port number of, for example, a node n13 having node ID closest to content ID included in the publish message (e.g. upper digits match more), and transfers the publish message to the IP address and the port number.

On the contrary thereto, the node n13 receives the publish message, refers to a table of level 4 of the own DHT, and recognizes that a node having node ID closest (e.g. upper digits match more) to the content ID included in the publish message is the node itself. In other words, the node n13 recognizes that a root node of the content ID is the own node. Then the node n13 registers the node information included in the publish message in the own index information.

Here, the node information included in the publish message is also registered (cached) in a node nn (node n8 and node n11 in the example of FIG. 4) on a transfer route from the content retention node to the root node.

In a case where a user of a node nn desires to see a program failed to be recorded, the node nn (hereinafter referred to as "user node") desiring to acquire content data of the program hashes, by a common hash function, a program code (e.g. G code) of the program inputted by the user to generate a content ID, and transmits a content location inquiry (search) message (a request message for requesting content data) including the content ID and the node information of the own node (the user node) to other nodes nn according to the routing table of the own DHT. Thus, similarly to the publish message, the content location inquiry message finally reaches the root node of the content ID by DHT routing using content ID as a key and by routing through (being transferred to) several nodes nn (hereinafter referred to as "relay node"). Further, the root node transmits a content transmission request message including node information of the user node to any one of the content retention nodes where the node information is registered in the index information. Accordingly, the user node acquires (downloads) the content data related to the content location inquiry (search) message from the content retention node. Here, the user node may acquire (receives) the index information from the root node, connect the content retention node storing the content data based on any one of the node information included in the index information, and acquire (download) the content data therefrom.

The user node may also acquire (receive) the node information from a cash node cashing the same node information as the root node before the content location inquiry message reaches the root node.

Then the user node requests an accounting process for secondary use of the content data connected to an accounting server 2b and acquired.

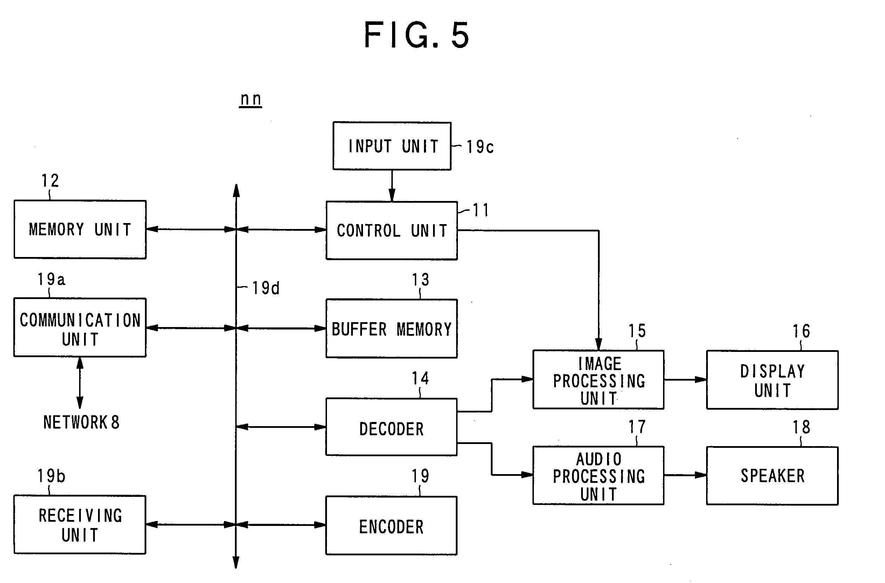

Next, with reference to FIG. 5, configuration and function of a node nn will be explained.

FIG. 5 is a view showing a schematic configuration example of a node nn.

The node nn is configured by including, as shown in FIG. 5: a control unit 11 being a computer configured by a CPU having computing function, a RAM for work, and a ROM for memorizing various data and programs; a memory unit 12, as a program information storage means and a node information memorizing means, which are configured by an HDD or the like for memorizing and storing various data (e.g. content data, node information, DHT, and IP address of the accounting server 2b), various types of programs and the like; a buffer memory 13 for temporarily storing received content data; a decoder 14 for decoding (data stretch or decryption) encoded video data (image information) and audio data (voice information) included in content data; an image processing unit 15 for providing a predetermined graphic process to the video data thus decoded or the like and outputting the data as video signal; a display unit 16 such as CRT and liquid crystal display for displaying image based on the video signal outputted from the image processing unit 15, an audio processing unit 17 for converting the decoded audio data in use of digital/analog (D/A) conversion into an analog audio signal, amplifying the converted signal by an amplifier and outputting the same; a speaker 18 for outputting the audio signal outputted from the audio processing unit 17 as acoustic wave; an encoder 19 as an encoding means for encoding the received content data; a communication unit 19a for carrying out communication control between other node nn and the accounting server 2b through the network 8; a receiving unit 19b such as an tuner or the like for receiving content data of the program broadcasted from a broadcast station 2a, an input unit 19c (e.g. a keyboard, a mouse, or an operation panel) for receiving instruction from a user and providing an instruction signal in response to the instruction to the control unit 11, wherein the control unit 11, the memory unit 12, the buffer memory 13, the decoder 14, the encoder 19, the communication unit 19a, and the receiving unit 19b are mutually connected through a bus 19d. Here, a personal computer, a set top box (STB), and TV receiver are applicable as the nodes nn.

In such the configuration, when CPU reads out and executes a program (including a node processing program of the present invention) memorized in the memory unit 12 or the like, the control unit 11 integrally controls and carries out a process as any one of the above-mentioned user node, relay node, root node, cache node, content retention node and the like, and the control unit 11 functions as a program code acquisition means, a program information storage means, an identification information generating means, a registration message transmitting means, a registration message receiving means, a request message transmitting means, and a program information acquisition means according to the present invention and carries out various processes described later.

Here, in the present embodiment, there are a case where the content data are encrypted (scrambled) by the encryption key unique to the respective nodes nn and memorized and stored and a case where the content data are not encrypted and memorized and stored. In the case where the content data are encoded, memorized and stored, the control unit 11 functions as an encryption key generation means of the present invention and generates the encryption key, and further functions as a decryption key acquisition means and acquires the decryption key for decoding the acquired content data.

Further, in a case where the content data are encoded, memorized and stored, a secret key as a key data (key data as a source of the encryption key) unique to respective nodes nn is memorized and stored, for example, when the node nn are manufactured or shipped, in a secure nonvolatile memory as a key data memory means provided in the memory unit 12. Such the secret key is protected from rewriting, deleting, and taking out from outside.

Here, the node processing program may be downloaded, for example, from the predetermined server in the network 8. For example it may be recorded in the recording medium such as CD-ROM and read through a drive of the recording medium.

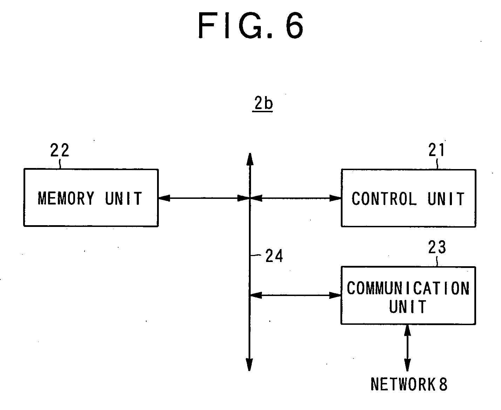

Next, with reference to FIG. 6, configuration and function of the accounting server 2b is described.

FIG. 6 is a view showing an example of schematic configuration of the accounting server 2b.

Ordinary server computers are applicable to the accounting server 2b and the accounting server 2b is configured by including: as shown in FIG. 6, a control unit 21 including a CPU, a RAM for work, and a ROM for memorizing various data and programs; a memory unit 22 including HDD for memorizing (storing) various data and programs; and a communication unit 23 for carrying out communication control between the network 8 and the node nn, wherein respective components are mutually connected through a bus 24.

In such the configuration, when CPU reads out and executes a programmemorized by the memory unit 22 or the like, the control unit 21 integrally controls and functions as a user information managing means, an accounting process means, and value provision process means or the like according to the present invention and carries out various processes described later.

Further, in a case where content data are encoded, memorized and stored, the accounting server 2b memorizes and manages, as a key data management device (key server), the above-mentioned secret key unique to respective nodes nn in correspondence with node ID being an example of identification information unique to the respective nodes nn, and the control unit 21 executes the key data management processing program according to the present invention to function as the key managing means, the decryption key generating means, and the decryption key transmission means according to the present invention, and carries out various processes described later. Here, for example, the key data management processing program may be downloaded from the predetermined server on the network 8, or may be recorded in a recording medium such as CD-ROM and read through a drive of the recording medium.

The memory unit 22 is configured by including a user information database 22a memorizing user information with respect to every user of respective nodes nn.

Further in the user information database 22a, as user information, user personal information (e.g. user ID, address, name, telephone number, e-male address) of the respective nodes nn, and payment information (accounting information, information indicative of payment method, credit card number, etc.) are registered (memorized) in correspondence with manufacturing number and node ID of respective nodes nn. The manufacturing number and the node ID of respective nodes nn are registered for example at the time of manufacturing or before shipment of the node nn (or the node ID may be registered at the time of participation into the overlay network 9). Further, the user personal information or the payment information is registered in correspondence with the manufacturing number or the like already registered when the user purchases the node nn.

Further in a case where content data are encoded, memorized and stored, the secret key unique to respective nodes nn is registered in correspondence with manufacturing number and node ID of respective nodes nn in the user information database 22a. The secret key of respective nodes nn is registered at the time of manufacturing or before shipment of the node nn similarly to for example the manufacturing number. In other words, only the content retention node and the accounting server 2b retain the secret key of a certain content retention node.

### [2. Action of content distribution system]

Next, an operation of a content distribution system S will be described.

### (Embodiment 1)

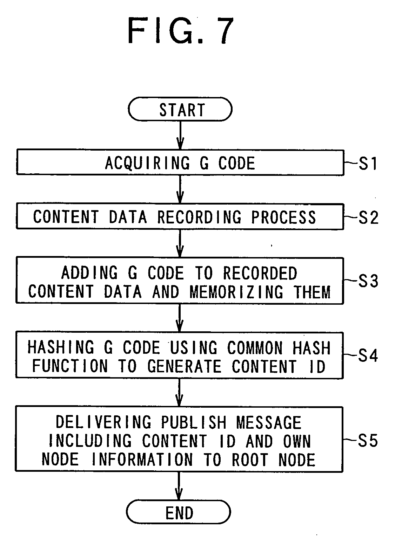

First, with reference to FIGs. 7 to 9, an operation of a content distribution system S related to an embodiment 1 is described. The embodiment 1 is a mode where content data are memorized and stored without being encoded.

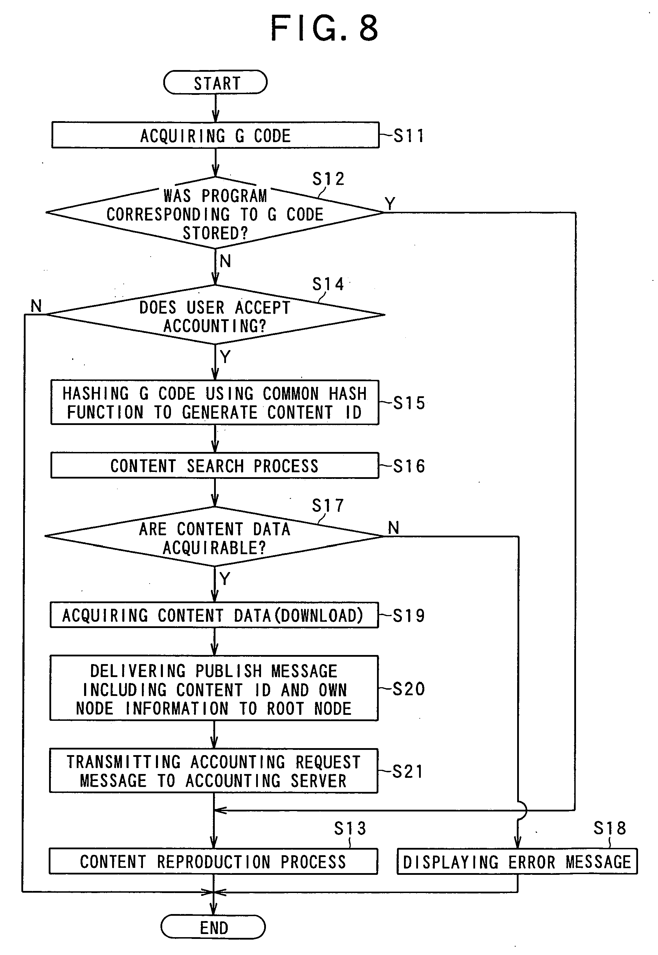

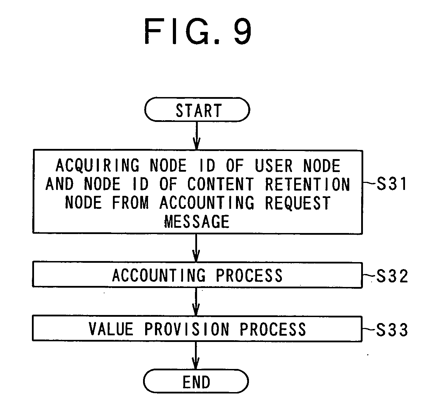

FIG. 7 is a flowchart showing a content recording process in a control unit 11 of a node nn related to the embodiment 1. FIG. 8 is a flowchart showing a content reproducing process in the control unit 11 of the node nn related to the embodiment 1. FIG. 9 is a flowchart showing an accounting process in a control unit 21 of an accounting server 2b.

Here, it is a premise of the embodiment 1 that G code reservation is made according to for example G code inputted in advance by a user through an input unit 19c, in an arbitrary node nn.

Then in the node nn, processes shown in FIG. 7 starts and the control unit 11 acquires (memorizing in a predetermined area of RAM) the G code inputted by the user, when recording date and time of a program reserved according to G code arrive (Step S1).

Next, the control unit 11 carries out processes of receiving and recording content data of a program broadcasted from a broadcast station 2a (Step S2). In other words, the control unit 11 receives the content data of a program broadcasted in a broadcast channel related to the G code reservation by the receiving unit 19b, controls to memorize and store the content data in a memory unit 12 and carries out a recording process.

Then, when the recording process is finished, the control unit 11 adds (relating) the G code thus acquired to the recoded content data and memorizes it (Step S3). Accordingly, a correspondence relation between the recorded content data and the G code is clarified.

Next, the control unit 11 hashes the G code thus acquired using the common hash function and generates a content ID (Step S4).

Next, the control unit 11 transmit the content ID thus generated and a publish message including own node information to the root node (Step S5) and finish the process. Then the publish message thus transmitted reaches a root node of the content ID through several relay nodes as explained using FIG. 4. When the root node receives the publish message, the root node memorizes the node information included in the publish message, that is, registers it in index information.
Accordingly the node nn thus transmitting the above publish message becomes a content retention node.

Next in a process shown in FIG. 8, G code of the desired program (for example the user acquires the G code of the program from a program column of the past newspaper and the like) is inputted by the user through an input unit 19c, in the user node, and the process starts when a reproduction instruction is inputted. When the process starts, the control unit 11 acquires G code thus inputted by the user (Step S11), and subsequently it is judged whether or not the content data of a program corresponding to the G code is stored (recorded) (Step S12).

In a case where content data of the program corresponding to the G code (Step S12: Y), the control unit 11 carries out content data reproduction process (Step S13). That is, the control unit 11 carries out the reproduction process to reproduce the content data corresponding to the G code from the memory unit 12.

In a case where the program content data corresponding to the G code is not stored (Step S12: N), the control unit 11 causes a display unit 16 to display a screen to prompt to input whether or not accounting for use of the content data is accepted. When the user operates the input unit 19c to press, for example, a "denial" button, the control unit 11 judges that the user does not accept the accounting (Step S14: N) and finishes the process.

On the other hand, the user operates the input unit 19c to press, for example, an "acceptance" button, the control unit 11 judges that the user accepts the accounting (Step S14: Y), hashes the G code thus acquired in the above Step S11 using the common hash function to generate the content ID (Step S15), and carries out a content search process (Step S16).

In the content search process, the control unit 11 transmits to the root node a content location inquiry (search) message including the content ID thus generated and node information of the own node (the user node) and waits a response. Then the content location inquiry (search) message thus transmitted reaches the root node of the content ID through several relay nodes as described above.

Then, when the root node receives the content location inquiry (search) message, it judges whether or not node information of a content retention node storing content data corresponding to the content ID is registered in index information. In a case where it is registered, the root node transmits a content transmission request message including node information of the user node to the registered content retention node (any singular node or plural nodes in the case plural content retention nodes are registered). When the content retention node receives the content transmission request message, it transmits a response message (including node information of the content retention node) indicating that the content data related to the above request can be transmitted, to the user node.

Or in a case where the node information of the content retention node storing the content data corresponding to the content ID is registered in the index information, the root node transmits a response message including index information defining node information of the registered content retention node to the user node.

On the other hand, in a case where the node information of the content retention node storing the content data corresponding to the content ID is not registered in the index information, the root node transmits a response message indicating that it is not registered to the user node.

When the user node receives the response message, the control unit 11 referees the response message and judges whether or not the content data of the above program thus instructed to reproduce can be acquired (Step S17). In a case where it can not be acquired (Step S17: N), the control unit 11 displays an error message indicating that the content data of the program thus instructed to reproduce can not be reproduced (Step S18) and finishes the process.

On the other hand, in a case where the content data can be acquired (Step S17: Y), the control unit 11 of the user node connects to the content retention node according to the node information (IP address and port number) indicated by the above response message to acquire the content data (downloading) (Step S19), and memorizes and stores in the memory unit 12. Here the user node acquires the node ID thereof from the content retention node.

Next, the control unit 11 transmits a publish message including the content ID thus generated in the Step S15 and own node information to the root node thereof (Step S20).

Then the publish message thus transmitted reaches the root node of the above content ID through several relay nodes as explained using FIG. 4. When the root node receives the publish message, the root node memorizes the node information included in the same, in other words, registers it in the index information. Accordingly the user node also becomes a new content retention node. The more popular program increases the number of requests for the content data and further the number of nodes nn storing the content data.

Next, the user node is connected to an accounting server 2b according to the IP address of the accounting server 2b memorized in a memory unit 12 and transmits an accounting request message (including the node ID of the own (user node) and the node ID of the content retention node) indicative of accounting request of the content data to the accounting server 2b (Step S21).

Then, in a case where for example the accounting server 2b notifies completion of accounting, the user node carries out the content data reproduction process (Step S13).

Meanwhile, a control unit 21 of the accounting server 2b receiving the accounting request message starts a process shown in FIG. 9 and acquires node ID of the user node and node ID of the content retention node from the accounting request message (Step S31).

Next, the control unit 21 of the accounting server 2b acquires user information in correspondence with the node ID of the user node thus acquired from a user information database 22a and carries out an accounting process of accounting a predetermined amount of use charge to the user specified based on the personal information in the user information (for example, registering accounting information of accounting the use charge in settlement information of the user) (Step S32). Then the use charge is withdrawn from the user's bank account, and the use charge thus charged is paid to a program producer and a writer or the like of a broadcast station side according to the predetermined basis.

Next, the accounting server 2b acquires user information in correspondence with the node ID (node ID of the content retention node included in the accounting request message) of the above acquired content retention node from the user information database 22a and carries out a process of providing a value (i.e. compensation (kickback) to a user storing and providing content data to other nodes nn) to the user identified based on personal information in the user information (for example, registering value provision information for providing predetermined amount of value charge in settlement information of the user) (Step S33) and finishes the process. Accordingly since the user of the content retention node can receive compensation by storing the program content data, the motivation of storing content data is provided to all users.

Thus, according to the embodiment 1, G code of the program related to the content data stored in the content retention node is hashed using the common hash function to make a content ID, and the node information of the content retention node is registered in the index information in the root node of the content ID. Therefore, the user node hashes G code of the desired program to generate the content ID and transmits the content location inquiry (search) message to the other nodes nn using the content ID as a key. Then a location (node information of the content retention node storing the same) of the content data of the desired program can be known through the root node.

Further, since content data of the more popular program is recorded by more users, the content data are stored in the more content retention nodes. In addition, since the user node is published (i.e. the node information is registered in the root node) as a content retention node in a case where the user node acquires content data from the content retention node, the more popular content data can be accessed (acquired) easier without placing burden on specific device such as a server device (preventing load centralization and improving scalability). Even in a case where the content data of the program is failed to record, it can be acquired more securely and simpler. Further since content data are stored by respective user operation, the cost (server operation, etc.) for secondary use of the content data can be greatly reduced.

Further, since the user of the content retention node can receive compensation by storing the program content data, even the content data broadcasted and recorded considerably before, for example, one month ago or more than one year ago, are also worth storing without deletion, and they provide all users with motivation to keep the content data further more. Accordingly even the content data of considerably old programs can be acquired by more secure and easier operation.

In a case where content data of the program are broadcasted via radio waves, the content data can be stored in many content retention nodes without placing burden on the network 8 (without consuming bandwidth).

Further, when the content data are acquired, the charge for the secondary use of the content data is charged on the user by the accounting server 2b, and the collected use charge is paid to the program producers and writers of the broadcast station side according to the predetermined basis. Therefore, rights of the program producers and the writers of the broadcast station side with respect to the secondary use of the content data can be guaranteed.

### (Embodiment 2)

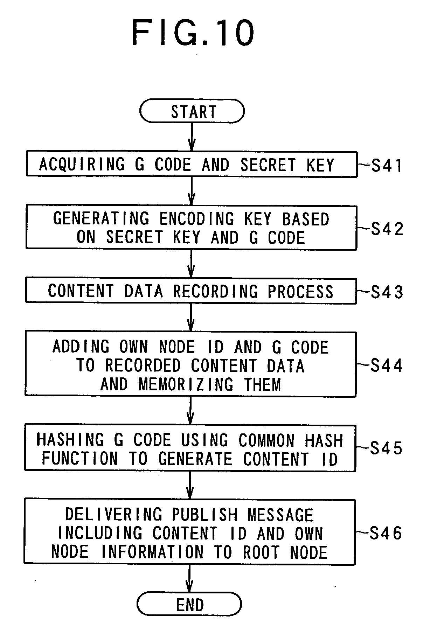

First, with reference to FIGs. 10 to 12, an operation of a content distribution system S related to an embodiment 2 is described. The embodiment 2 is a mode that content data is encoded, and memorized and stored.

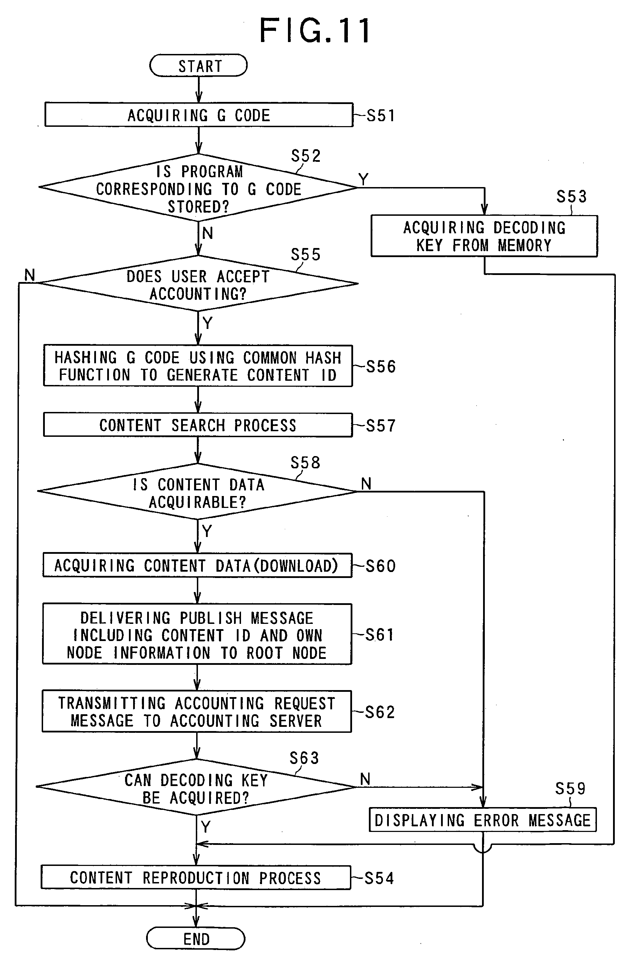

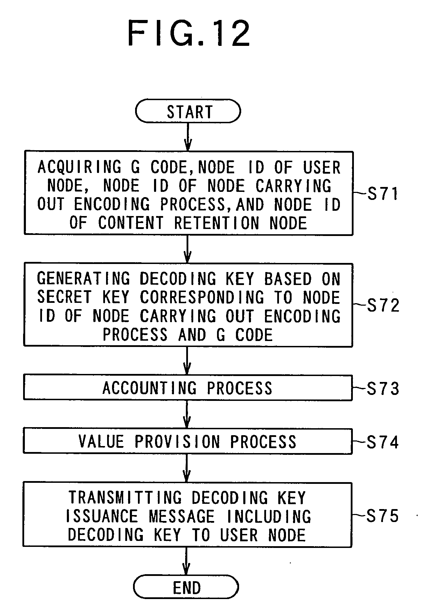

FIG. 10 is a flowchart showing a content recording process in a control unit 11 of a node nn related to the embodiment 2. FIG. 11 is a flowchart showing a content reproduction process in the control unit 11 of the node nn related to the embodiment 2. FIG. 12 is a flowchart showing an accounting process in a control unit 21 of an accounting server 2b.

A premise of the embodiment 2 is similar to that of the embodiment 1. In the node nn, processes shown in FIG. 10 starts and the control unit 11 acquires the G code inputted by the user and an own secret key from a secure memory in a memory unit 12 when recording date and time of a program reserved according to G code arrive (Step S41). The control unit 11 generates an encryption key based on the secret key and G code (Step S42) and memorizes. For example, an information column arranged with the secret key and the G code is hashed with a predetermined hash function, and the encryption key is generated. Thus generated encryption key is irreversible one which can be obtained only by the secret key and the G code and responds only to combination of the secret key and the G code.

Next, the control unit 11 carries out a process of receiving content data of a program broadcasted from a broadcast station 2a and a recording process (Step S43). In the recording process, the control unit 11 controls the memory unit 12 to memorize and store while it is encoding the content data thus received by an encoder 19 with the encryption key thus generated (i.e. encoding the received content data using the generated encryption key).

Then, when the recording process is finished, the control unit 11 adds (relating) the own node ID and the G code thus acquired to the recoded content data and memorizes it (Step S44). In other words, later in the accounting server 2b, the node ID of the node nn is added to the content data to identify the secret key of the node nn carrying out the encoding process.

Here, duplicated explanation of a process of Steps S45 and S46 is omitted because it is similar to that of Steps S4 and S5.

Next, in a process shown in FIG. 11 similar to that of the embodiment 1, G code of the desired program is inputted by the user through an input unit 19c, in the user node, and the process starts when a reproduction instruction is inputted. When the process starts, the control unit 11 acquires the G code thus inputted by the user (Step S51), and subsequently it is judged whether or not the program corresponding to the G code is already stored (recorded) (Step S52).

In a case where content data of the program corresponding to the G code is stored (Step S52: Y), the control unit 11 acquires a decryption key as the encryption key already generated and memorized in the memory of the memory unit 12 (Step S53) and decodes the content data by the decoder 14 using the decryption key to carry out a reproduction process (Step S54).

On the other hand, in a case where the program corresponding to the G code is not stored (Step S52: N), the control unit 11 causes a display unit 16 to display a screen to prompt to input whether or not accounting for use of the content data is accepted.

Meanwhile, duplicated explanation of a process of Steps S55 to S61 is omitted because it is similar to that of Steps S14 to S20 of the embodiment 1.

Then, in Step S62, the user node connects to the accounting server 2b according to the IP address of the accounting server 2b memorized in the memory unit 12 and transmits a decryption key request/accounting request message (including the G code thus acquired, the node ID of the own (user node), the node ID added to the content data acquired in the above Step S60 (i.e. the node ID of the node nn subjected to the decoding process (the encoded content data), and the node ID of the content retention node) indicative of a request of decryption key of the content data and a request of accounting to the accounting server 2b.

Meanwhile, the accounting server 2b receiving the decryption key request/accounting request message starts a process shown in FIG. 12 and acquires the G code, the node ID of the user node, the node ID of the node nn carrying out the encoding process, and the node ID of the content retention node (Step S71).

Next, the control unit 21 of the accounting server 2b acquires a secret key (a secret key unique to the node nn carrying out the encoding process) in correspondence with the node ID of the node nn carrying out the acquired encoding process from a user information database 22a, and generates a decryption key based on the secret key thus acquired and the above acquired G code (Step S72). The decryption key is generated, similarly to the above Step S42 in the node nn carrying out the decoding process, for example by hashing an information column arranging the secret key and the G code using a predetermined hash function (the function same as that of the node nn carrying out the decoding process).

Next, the control unit 21 of the accounting server 2b carries out an accounting process of charging a predetermine amount of a use charge to the user identified based on personal information in the user information in correspondence with the node ID of the above acquired user node (Step S73).

Next, in a manner similar to the embodiment 1, the accounting server 2b carries out a value provision process to the user identified based on personal information in the user information in correspondence with the node ID of the acquired content retention node (Step S74).

Upon the completion of the accounting process, the control unit 21 of the accounting server 2b transmits a decryption key issuing message including the generated decryption key to the user node transmitting the decryption key request/accounting request message (Step S75). Then the process is finished. In a case where the accounting process is not normally finished for example because the user fails to pay the use charge, the decryption key is not generated and an error message of the effect is transmitted to the user node.

Then, in a case where the control unit 11 of the user node receives the decryption key issuing message, it judges that the decryption key can be acquired (Step S63: Y), acquires the decryption key from the decryption key issuing message, decodes the content data by the decoder 14 using the decryption key to carry out the reproduction process (Step S54). On the other hand, in a case where the control unit 11 of the user node receives the error message, it judges that the decryption key can not be acquired (Step S63: N), displays the error message of the effect that the content data of the program instructed to reproduce (Step S59) and finishes the process.

As explained above, according to the embodiment 2, effect similar to that of the embodiment 1 can be obtained and, in addition, security can be improved because the content data are encoded and stored. Furthermore, the encryption key (decryption key) of the content data is a key generated based on the secret key unique to the respective nodes nn and the G code of the program and issued only from the accounting server 2b knowing secret keys of all the nodes nn except for the own encryption key. Therefore, other nodes nn can not generate the decryption key of the content data encoded and stored in a given node nn, and also the decryption key acquired from the accounting server 2b can decode only the corresponding content data. Therefore, safety can be further secured.

Further, the accounting server 2b can generate the decryption key of the content data and provide it to the user node only by managing the secret key in correspondence with the node ID unique to respective nodes nn and acquiring the node ID of the node encoding the G code of the program and the content data of the program from the user node. Therefore, a convenient decryption key issuing system can be provided.

Further, since the accounting server 2b issues the decryption key in a case where the accounting process is normally completed, it can collect the charge for secondary use of the content data more securely.

Meanwhile, some of the above nodes nn are provided with a known automatic CM cut function. In such the nodes, CM information broadcasted in the program is cut (deleted) and then content data are recorded, and it is not in other cases. It may be configured to decide whether or not value is provided or not based on whether or not such the CM information is included in the content data. For example, the content retention node adds (in correspondence with) information indicating whether or not the CM information (e.g. CM presence-or-absence flag) is included together with the own node ID and the G code with respect to the recorded content data, to the content data and memorizes (Step S3, Step S44). Such the CM presence-or-absence flag is set up to be "0" when the automatic CM cut function is "on" and set up to be "1" when the function is "off".

Then, after the user node acquires the content data, it transmits the accounting request message (the decryption key request/accounting request message) including the CM presence-or-absence flag in addition to the own node ID, the content retention node ID or the like, to the accounting server 2b (Step S21, Step S62). Then the accounting server 2b judges whether or not the CM information is included in the content data corresponding to the G code based on the CM presence-or-absence flag (for example in the case of flag "1", CM is included, and in the case of flag "0", CM is not included) In a case where the CM information is included, it may be configured such that the accounting server 2b carries out the above value providing process to the user identified by the user information in correspondence with the node ID of the content retention node included in the accounting request message (decryption key request/accounting request message) (or that the value larger than the value in a case where CM is not cut is provided). Thus provided value is offered (kickbacked) from a sponsor broadcasting CM in the program. According to the configuration, the number of users storing the content data without cutting CM when the content data are stored increases (preventing separation from CM because the value is given). Therefore, in the system S, since the CM information is included in the content data stored in many content retention nodes, the sponsor has further more users see CM information and effect of CM increases.

Here, the above-mentioned content distribution system S is also applicable to a system of a video on-demand service.

Further, in the above-mentioned embodiments, G code is exemplified as the program code. However, the other code, number or the like is applicable as long as it can identify the program.

Further, the explanation is given on a premise that the overlay network 9 of the above-mentioned embodiments is configured by the algorithm using DHT. However, the present invention is not limited thereto.

The present invention is not confined to the foregoing embodiments. The embodiments are exemplification, and any modes having configurations substantially similar to the technical concept described within the scope of the present invention described in the claims and similar effect are included in the technical scope of the present invention.

The entire disclosures of Japanese Patent Application No. 2006-14182 filed on January 23, 2006 including the specification, claims, drawings and abstract are incorporated herein by reference in its entirety.

## Claims

1. An information distribution system including a plurality of node devices mutually communicable through a network, wherein any one of the node devices receives program information broadcasted from a broadcast station,
wherein the node device receiving the program information thus broadcasted, comprising:
a program information storage means for storing the program information;
an identification information generation means for acquiring a program code unique to the program information thus stored and generating identification information corresponding thereto; and
a registration message delivery means for delivering a registration message including node information indicative of the node device thus storing the program information to a node device managing the identification information based on the identification information thus generated,
wherein the node device managing the identification information, comprising:
a registration message receipt means for receiving the registration message; and
a node information storage means for memorizing the node information included in the registration message thus received, and
the node device desiring to acquire the program information, comprising:
an identification information generation means for acquiring a program code unique to the program information and generating identification information corresponding thereto;
a request message delivery means for delivering a request message requesting the program information to the node device managing the identification information based on the identification information thus generated; and
a program information acquisition means for acquiring the program information from the node device storing the program information regarding the request, by delivering the request message.

2. An information distribution system including a plurality of node devices capable of mutually communicating through a network,
wherein any one of the node devices receives program information broadcasted from a broadcast station, the node device receiving the program information thus broadcasted, comprising:
a key data memory means for memorizing key data unique to the node device;
a program code acquisition means for acquiring a program code unique to the program information thus received;
an encryption key generation means for generating an encryption key based on the key data thus memorized and the program code thus acquired;
an encoding means for encoding the program information thus received using the encryption key thus generated;
a program information storage means for storing the program information thus encoded;
an identification information generation means for generating identification information corresponding to the program code thus acquired; and
a registration message delivery means for delivering a registration message including node information indicative of the node device storing the program information thus encoded to a node device managing the identification information based on the identification information thus generated,
wherein the node device managing the identification information, comprising:
a registration message receipt means for receiving the registration message; and
a node information memory means for memorizing the node information included in the registration message thus received, and
wherein the node device desiring to acquire the program information thus encoded, comprising:
an identification information generation means for acquiring a program code unique to the program information and generating identification information corresponding thereto;
a request message delivery means for delivering a request message requesting the program information to the node device managing the identification information based on the identification information thus generated;
a program information acquisition means for acquiring the program information from the node device storing the program information regarding the request, by delivering the request message;
a decryption key acquisition means for acquiring a decryption key for decoding the program information thus acquired; and
a decoding means for decoding the program information thus acquired using the decryption key.

3. The information distribution system according to claim 2, further comprising:
a key data management device communicable with the respective node devices through the network,
wherein the program information is added with encoded identification information of the node device to the program information, and
the decryption key acquisition means of the node device acquiring the program information thus encoded transmits, to the key data management device, decryption key request information including the program code of the acquired program information and the identification information of the node device added to the program information,
wherein the key data management device, comprising:
a key management means for managing key data unique to the respective node devices in correspondence with identification information unique to the respective node devices;
a decryption key generation means for acquiring key data in correspondence with the identification information of the node device included in the decryption key request information and generating the decryption key based on the program code included in the key data and the decryption key request information; and
a decryption key transmission means for transmitting the decryption key thus generated to the node device transmitting the decryption key request information.

4. A node device acquiring the program information, which is included in the information distribution system according to any one of claims 1 to 3,
wherein the node device acquiring the program information, comprising:
a program information storage means for storing the acquired program information;
an identification information generation means for acquiring the program code unique to the program information thus stored and generating the identification information corresponding thereto; and
a registration message delivery means for delivering a registration message including node information indicative of the node device thus storing the program information to a node device managing the identification information based on the identification information thus generated.

5. The node device, which receives the broadcasted program information, included in the information distribution system according to any one of claims 1 to 3, further comprising:
a program information storage means;
an identification information generation means; and
a registration message delivery means.

6. A node device, which desires to acquire the program information, included in the information distribution system according to any one of claims 1 to 3, further comprising:
an identification information generation means;
a request message delivery means; and
a program information acquisition means.

7. A recording medium which records, in a computer readable manner, a node processing program causing a computer to function as the node device according to claim 4.

8. The key data management device included in the information distribution system according to claim 3, further comprising:
a key management means;
a decryption key generation means; and
a decryption key transmission means.

9. The key data management device according to claim 8, further comprising:
a user information management means for memorizing and managing user information with respect to each of the users of the respective node devices; and
an accounting process means for carrying out an accounting process to the user of the node device to which the decryption key request information is transmitted,
wherein, upon the completion of the accounting process, the decryption key transmission means transmits the decryption key thus generated to the node device.

10. The key data management device according to claim 8,
wherein identification information of the node device storing the program information is included in the decryption key request information, the key data management device, further comprising:
a user information management means for managing the user information with respect to each of the users of the respective node devices in correspondence with the identification information unique to the respective node devices; and
a value provision process means for carrying out a value provision process to the user identified by the user information in correspondence with the identification information of the node device storing the program information included in the decryption key request information.

11. The key data management device according to claim 8,
wherein identification information of the node device storing the program information is included in the decryption key request information, the key data management device, further comprising:
a user information management means for managing the user information with respect to each of the users of the respective node devices in correspondence with the identification information unique to the respective node devices; and
a value provision process means wherein it is judged whether or not CM information is included in the program information corresponding to the program code included in the decryption key request information, and in a case where the CM information is included, a value provision process is carried out to the user identified by the user information in correspondence with the identification information of the node device storing the program information included in the decryption key request information.

12. A recording medium which records, in a computer readable manner, the key data management process program causing a computer to function as the key data management device according to any one of claims 8 to 11.

13. An information distribution method in an information distribution system including a plurality of node devices capable of mutually communicating through a network,
wherein any one of the node devices receives program information broadcasted from a broadcast station, the node device receiving the program information thus broadcasted, comprising:
a step of storing program information;
a step of acquiring a program code unique to the program information thus stored and generating identification information corresponding thereto; and
a step of delivering a registration message including node information indicative of the node device storing the program information to a node device managing the identification information based on the identification information thus generated,
wherein the node device managing the identification information, comprising:
a step of receiving the registration message; and
a step of memorizing the node information included in the registration message thus received,
wherein a node device desiring to acquire the program information, comprising:
a step of acquiring a program code unique to the program information and generating identification information corresponding thereto;
a step of delivering a request message requesting the program information to the node device managing the identification information based on the identification information thus generated; and
a step of acquiring the program information from the node device storing the program information regarding the request by delivering the request message.

14. An information providing method in an information distribution system including a plurality of node devices mutually communicable through a network,
wherein any one of the node devices receives program information broadcasted from a broadcast station,
wherein the node device receiving the program information thus broadcasted, comprising:
a step of memorizing key data unique to the node device;
a step of acquiring a program code unique to the program information thus received;
a step of generating an encryption key based on the key data thus memorized and the program code thus acquired;
a step of encoding the program information thus received using the encryption key thus generated;
a step of storing the program information thus encoded;
a step of generating identification information corresponding to the program code thus acquired; and
a step of delivering a registration message including node information indicative of the node device storing the program information thus encoded to a node device managing the identification information based on the identification information thus generated,
wherein the node device managing the identification information, comprising:
a step of receiving the registration message; and
a step of memorizing the node information included in the registration message thus received,
wherein a node device desiring to acquire the program information thus encoded, comprising:
a step of acquiring a program code unique to the program information and generating identification information corresponding thereto;
a step of delivering a request message of requesting the program information to the node device managing the identification information based on the identification information thus generated;
a step of delivering the request message and acquiring the program information from the node device storing the program information regarding the request;
a step of acquiring a decryption key for decoding the program information thus acquired; and
a step of decoding the program information thus acquired using the decryption key.
